# EUROPEAN PATENT SPECIFICATION

(11) **EP 4 072 810 B1**
(45) Date of publication and mention of the grant of the patent: **19.03.2025**
(21) Application number: 20812348.9
(22) Date of filing: 01.12.2020
(51) Int. Cl.: B29B 11/14, B29C 49/02, B29B 11/06, B29C 49/00, B29B 11/00

(54) **METHOD FOR MANUFACTURING A CONTAINER PREFORM USING ADDITIVE MANUFACTURING**
VERFAHREN ZUR HERSTELLUNG EINER BEHÄLTERVORFORM UNTER VERWENDUNG VON GENERATIVER FERTIGUNG
PROCÉDÉ DE FABRICATION D'UNE PRÉFORME DE CONTENAT À L'AIDE D'UNE FABRICATION ADDITIVE

(30) Priority: 12.12.2019 FR 1914314
(43) Date of publication of application: 19.10.2022
(73) Proprietor: L'OREAL, 75008 Paris (FR)
(72) Inventor: FORRESTER, Matthew, 92110 CLICHY (FR)
(74) Representative: Casalonga
(86) International application number: PCT/EP2020/084005
(87) International publication number: WO 2021/115833

(56) References cited:
- BE-A- 801 867
- DE-U1- 20 314 295
- FR-A1- 3 058 341
- JP-A- 2016 002 697
- US-A1- 2018 071 980
- US-A1- 2018 186 035
- US-B2- 8 211 520
- RAMJI PANDEY: "Photopolymers in 3D printing applications", 1 January 2014 (2014-01-01), XP055447670, Retrieved from the Internet <URL:https://www.theseus.fi/bitstream/handle/10024/80083/pandey_ramji.pdf?sequence=1>

## Description

The present invention relates to the field of containers produced in the form of bottles.

The invention is particularly suitable for the manufacture of containers for storing cosmetic, pharmaceutical or dermato-pharmaceutical products. The term "cosmetic product" is understood, notably within the meaning of the present invention, to mean a product as defined in Regulation (EC) No 1223/2009 of the European Parliament and of the Council of 30 November 2009 relating to cosmetic products.

Such containers are notably used for the packaging of products in aqueous form, in the form of an oil, a milk, a cream, a paste, a gel, a mousse or a foam, an aerosol, etc.

US 2018 071980 A1 discloses a method in accordance with the preamble of claim 1. Further prior art is disclosed in FR 3 058 341 A1, JP 2016 002697 A, BE 801 867 A, DE 203 14 295 U1, US 2018/186035 A1, US 8 211 520 B2 and Ramji Pandey: "Photopolymers in 3D printing applications", , 1 January 2014 (2014-01-01), XP055447670, Retrieved from the Internet: URL:https://www.theseus.fi/bitstream/handle/10024/80083/pandey_ramji.pdf?sequence=1

In the field of bottling there has been a massive development of containers of which the transverse section is of elongate shape, this being chiefly for reasons connected with marketing, aesthetics, bulkiness, or how they fit in the hand.

Typically, such containers are generally produced by blow-moulding a tubular unfinished-form or preform which has been manufactured beforehand, for example using injection moulding.

Compared with the manufacture of a preform by extrusion, injection moulding is preferred when the container needs to be manufactured with a neck that has a screw thread or some other means allowing the attachment of a dispensing head comprising a pump or a valve, or of a closure cap.

In that case, the container preform is produced with this neck using injection moulding, and the blow-moulding is then performed in such a way as to not modify the shape of the neck, the latter for example being held captive in the blowing mould during this blowing operation.

When the container is manufactured by cold-cycle injection-blow-moulding, the moulded preform is cooled, and then stored before being blown later, possibly on a different manufacturing site.

With the current injection-blow-moulding method employed for manufacturing containers, the need to be able to demould the injection-moulded preform limits the complexity of the final shape of the container, particularly preventing shapes involving an undercut and complex shapes. Furthermore, the inner diameter of the neck of the preform has to be greater than 8 mm in order to be able to be moulded.

Moreover, a mould has a relatively high cost of manufacture, and this prevents a diversification of the aesthetic forms of the preforms so as to limit the number of different moulds that have to be manufactured.

The present invention aims to remedy these drawbacks.

The present invention is defined by the features of claim 1.

More specifically, it is an object of the present invention to be able to produce a container in a simple way and at low cost while at the same time making it possible to produce a wide variety of shapes, notably relatively complex shapes.

The invention relates to a method for manufacturing a preform intended for the production of a container, comprising:
- a step of transferring a digital model of the preform that is to be manufactured to an additive manufacturing machine,
- a step of producing the preform using the additive manufacturing machine from the transferred digital model, and
- a step of cooling the manufactured preform at ambient temperature.

What is meant by "cooling at ambient temperature" is a cooling that does not require any specific means for controlling and adjusting the temperature of the preform. The ambient temperature is generally comprised between 5°C and 35°C notably between 15°C and 25°C.

With the manufacturing method of the invention, the preform is obtained by additive manufacturing, also known as 3-D printing, rather than the container being produced in its final form directly by additive manufacturing.

In order to manufacture the container in its final form from the preform obtained by additive manufacturing, the following steps are provided.
- a step of heating the manufactured preform to between the glass transition temperature and the crystallization temperature of the material of the preform,
- a step of biaxial stretching of the preform in the radial direction and in the axial direction inside a blow-moulding mould, and
- a step of extracting the container formed from the blow-moulding mould.

Creating the preform using additive manufacturing, rather than creating the container directly, is particularly advantageous insofar as the preform that has been cooled after manufacture absolutely has to be heated up before the final container is shaped.

This step of heating the cooled preform makes it possible to render the stack of solidified layers that make up the preform and that was generated by the additive manufacturing more uniform before this preform is deformed inside the blow-moulding mould.

Thus, the act of passing through an intermediate step of producing the preform by additive manufacturing improves the mechanical strength of the container ultimately obtained after blow-moulding in comparison with a final container produced directly using additive manufacturing.

Moreover, in comparison with the conventional injection-blow-moulding method, the method of the invention does not require the use of a mould, which means that it is possible easily and inexpensively to diversify the designs of the preforms.

More generally, the method of the invention makes it possible to obtain containers of relatively complex shapes. For example, manufacturing the preform using additive manufacturing makes it possible locally to provide shapes with an undercut which will subsequently be found on the final blow-moulded container, there being no preform-demoulding step that prohibits such undercut shapes. For example, the preform produced by additive manufacturing may be provided internally with at least one protrusion which is formed as an integral part of the main body thereof, and/or with a groove, the transverse section of which is delimited by an outline comprising an undercut. Alternatively or in combination, the preform may also comprise recesses or hollows formed therein.

Independently of whether or not there are any undercut shapes present, the preform may also exhibit a wide variety of exterior shapes, notably complex shapes.

Furthermore, it also becomes possible to manufacture the preform using colour effects, decoration, etc. which will also be present on the finished container.

In addition, with additive manufacturing, it becomes possible to produce preforms with a neck inner diameter less than or equal to 8 mm, which is not possible with injection moulding.

The method for manufacturing the preform further comprises, before the step of transferring the digital model of the preform that is to be manufactured to the additive manufacturing machine, a step of creating said digital model.

This step of creating the 3-D digital model of the preform may be carried out on the site on which the preform is manufactured by additive manufacturing, or on a separate site.

The method for manufacturing the preform may also comprise, before the step of transferring the digital model of the preform that is to be manufactured to the additive manufacturing machine, a step of slicing this digital model into a plurality of successive layers.

In a first embodiment of this method, the step of producing the preform by additive manufacturing is obtained by the deposition of a fused material, which may take the form of a filament. Such cases are then described as using FDM or FFF (respectively Fused Deposition Modelling and Fused Filament Fabrication) technology.

In a second embodiment of this method, the step of producing the preform by additive manufacturing is obtained using a jet of material in the form of droplets.

In a third embodiment of this method, the step of producing the preform by additive manufacturing is obtained by sintering material using at least one beam of energy. This is then described as using SLS (Selective Laser Sintering) technology.

In a fourth embodiment of this method, the step of producing the preform by additive manufacturing is obtained using stereolithography. This is then described as using SLA (StereoLithography Apparatus) technology.

As indicated previously, during the method of manufacturing the container, a blow-moulding mould is used. The additive manufacturing machine and the blow-moulding mould may be sited on two distinct manufacturing lines, which may for example be on one and the same production site or else on two different sites. Alternatively, the additive manufacturing machine and the blow-moulding mould may be sited on one and the same manufacturing line, in this case then also maintaining the step of cooling the preform and then the step of heating same as indicated hereinabove.

Regarding the method for manufacturing the container, the step of biaxial stretching of the preform in the radial direction and in the axial direction may be obtained respectively by blowing at least one pressurized fluid into the preform and by pressing a stretch rod against the bottom of the preform.

In one alternative embodiment, the step of biaxial stretching of the preform in the radial direction and in the axial direction can be obtained solely by blowing, for example in the case of low-capacity containers.

In one particular embodiment of the method for manufacturing the container, the heating of the preform is performed before it is introduced into a blow-moulding mould.

The present invention will be better understood from studying the detailed description of embodiments that are given by way of entirely non-limiting examples and are illustrated by the appended drawings, in which:
[Fig 1] is a front view of a preform according to a first exemplary embodiment of the invention,
[Fig 2] is a view in cross-section on the line II-II of Figure 1.
[Fig 3] is a flowchart of the method for manufacturing the preform of Figures 1 and 2 according to one exemplary embodiment of the invention,
[Fig 4] is a flowchart of the method for manufacturing a container from the preform of Figures 1 and 2 according to one exemplary embodiment of the invention,
[Fig 5] is a front view of a container obtained according to the manufacturing method of Figure 4 from the preform of Figures 1 and 2,
[Fig 6] is a view in cross-section on the line VI-VI of Figure 5, and
[Fig 7] is a front view of a container obtained according to the manufacturing method of Figure 4 from a preform according to a second exemplary embodiment of the invention.

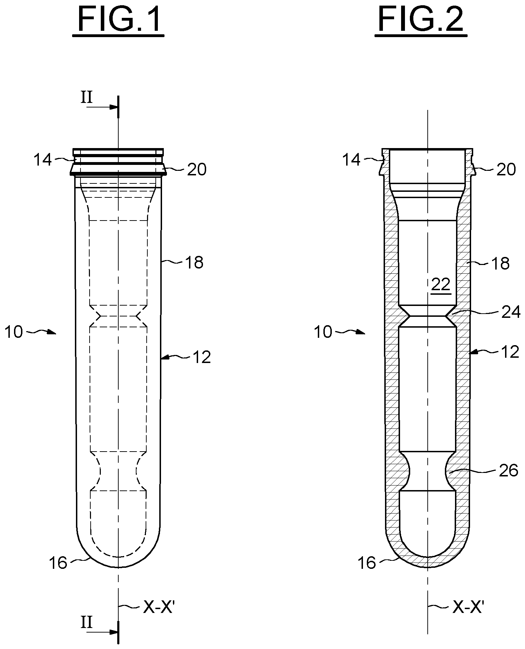

Figures 1 and 2 depict a preform, designated by the general numerical reference 10, which is intended for the manufacture, by blow-moulding, of a container for storing a product.

As will be described in greater detail later, the preform 10 is produced by additive manufacturing.

The container preform 10 is depicted in a position presumed to be vertical and extends along a longitudinal axis X-X' of elongation. The preform 10 is produced in a single piece, for example made of polyethylene terephthalate (PET). Alternatively, the preform 10 could be produced in other materials, for example polycarbonate (PC).

The preform 10 comprises a body 12 of axis X-X'. The body 12 comprises an open end forming a neck 14, and an opposite closed end forming a bottom 16. Between the neck 14 and the bottom 16, the body 12 has a lateral wall 18 of substantially cylindrical shape.

The neck 14 of the preform is manufactured to the finished dimensions of the container. The neck 14 is equipped in this instance on the outside with a snap-fastening hook 20 of annular shape to allow the attachment of a product-dispensing member or of a closure cap, once the container has been manufactured from the preform 10. As a variant, it is possible, instead of the annular hook, to provide a plurality of hooks spaced apart from one another in the circumferential direction, or else other types of retaining member, for example a screw thread.

The neck 14 and the bottom 16 axially delimit an internal volume 22 of the preform. The bottom 16 in this instance is domed. In a variant, the bottom 16 may have other forms, for example may be flat.

In the exemplary embodiment illustrated, the lateral wall 18 of the preform is internally equipped with two annular ribs 24, 26 extending radially into the internal volume 22. The ribs 24, 26 are axially spaced. The ribs 24, 26 may be continuous or discontinuous in the circumferential direction.

In the exemplary embodiment illustrated, the rib 24 has, in cross section, a triangular shape, and the rib 26 has a rounded shape. In a variant, the rib or ribs 24, 26 may have other shapes, for example polygonal, notably square, rectangular, hexagonal, etc.

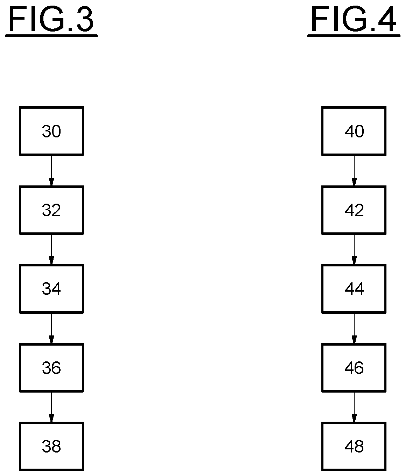

As indicated previously, the preform 10 is produced by additive manufacturing. The steps of the method that leads to the obtaining of the preform 10 will now be described with reference to Figure 3.

In a first step referenced 30, the 3-D digital model of the preform that is to be manufactured is created. The digital model is created from modelling software, for example computer aided design (CAD) software. The digital model may be generated in a standard file format such as the STL ("STereoLithography") format.

Next, in a second step 32, the digital model formulated is sliced into a plurality of successive layers by slicing software also known as a slicer. The slicing software may be the same software as the CAD software used for creating the digital model of the preform, or else may be separate software.

Then, in a third step 34, the created and sliced digital model is transferred to an additive manufacturing machine. The digital model is transferred to a control unit of the additive manufacturing machine.

The additive manufacturing machine may for example employ fused material deposition technology. In a way known per se, in that case, the additive manufacturing machine chiefly comprises a printing platform on which the preform is intended to be printed, a spool of filament which serves as print material, and an extrusion head which melts and conveys the filament in order to form the preform.

Alternatively, it is possible to use another type of additive manufacturing machine, for example a machine employing technology involving jets of material in the form of droplets. In that case, a liquid resin is heated inside a receptacle of the machine to the viscosity suitable for printing, and is then sprayed by a print head, in the form of microdroplets, onto a printing platform and solidified by photopolymerization using a light source incorporated into the print head in order to obtain the preform.

As a variant, it is alternatively possible to use other types of additive manufacturing machine, for example a stereolithography machine, or else an additive manufacturing machine that sinters powder using at least one beam of energy. In this last instance, the machine comprises a powder-spreading means, for example a roller, a platform on which the powder is deposited, and at least one laser beam for sintering and consolidating the powder in order to form the preform.

Whatever the type of technology employed by the sintering machine, the preform is manufactured in step 36 by the solidification of the successive layers of the digital model transferred to the sintering machine.

Finally, in a fourth step 38, the preform obtained by additive manufacturing is cooled at ambient temperature.

In the manufacturing method which has just been described, the step of additive manufacturing of the preform immediately follows the steps of creating the digital model thereof and of slicing this model. In another embodiment, the manufacturing method may begin from the additive manufacturing of the preform when the digital model and the slicing have been achieved beforehand.

The steps of the method for manufacturing the storage container from the preform obtained beforehand by additive manufacturing will now be described with reference to Figure 4.

After the manufacture of the preform as indicated hereinabove, the method for manufacturing the container comprises a step 40 of heating this preform in the solid state to a temperature which is higher than the glass transition temperature of the material of the preform and lower than the crystallization temperature.

This heating step 40 may for example be performed in an infrared radiation oven.

In a successive step 42, the heated preform is introduced into a blow-moulding mould.

Next, in a step 44, a stretch rod is introduced into the preform in such a way that the free end of this rod comes to press axially against the bottom of the preform.

Then, in a step 46, the preform is biaxially stretched in the radial direction by blowing a pressurized gas, for example, air, into it, and in the axial direction by the stretch rod which applies axial pressure to the bottom of the preform. The preform 10 is biaxially stretched to make it conform to the internal walls of the blow-moulding mould which have the desired container shape.

During this step 46 of biaxial stretching of the preform, the neck of the preform is held captive in the blow-moulding mould so that neither its shape nor its dimensions are modified.

Finally, in a last step 48, the container formed is extracted from the blow-moulding mould.

In the example which has just been described, the preform is stretched in the axial direction by the stretch rod. Alternatively, the preform could be stretched in the axial direction by a blow-moulding rod which then performs a dual function: exerting axial pressure on the bottom of the preform by pressing, and introducing gas into the latter to stretch it in the radial direction.

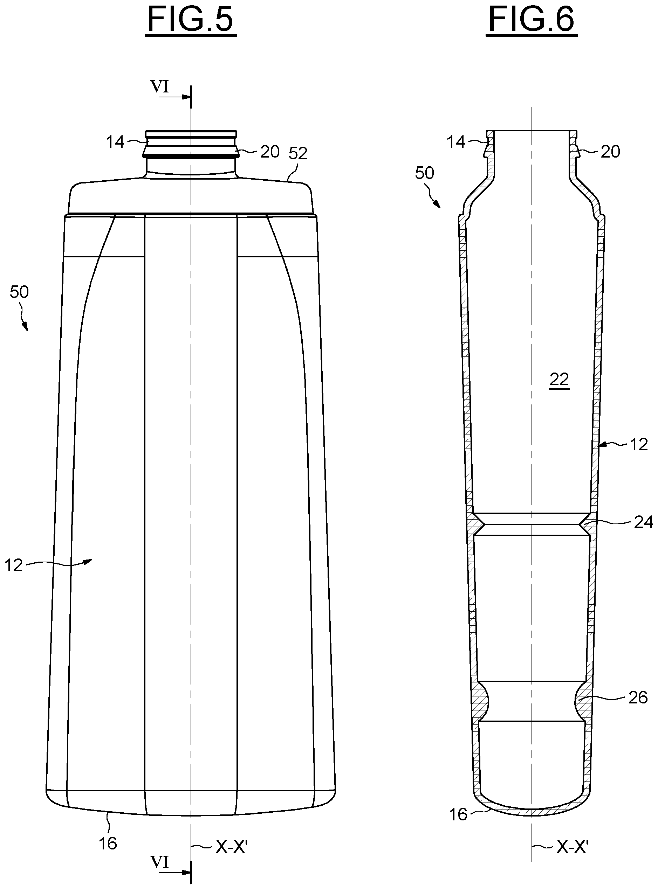

The container 50 which is manufactured from the preform 10 of Figures 1 and 2 according to the method described hereinabove is depicted in Figures 5 and 6.

On leaving the blow-moulding mould, the neck 14 of the container is separated from the periphery of the container 50 by an annular shoulder 52 oriented axially upwards.

As indicated previously, the preform of the container 50 has been obtained beforehand using additive manufacturing. Because the preform has been produced by solidifying successive layers, its shape may exhibit contours with an undercut which can thereafter be found again in the finished container.

In the exemplary embodiment illustrated, the container 50 internally comprises the ribs 22, 24 which have been formed on the preform. The shape of the preform, and therefore the final shape of the container 50, are not restricted to those illustrated in the figures, which are given purely by way of illustration.

Creating the preform using additive manufacturing makes it possible locally to obtain complex shapes, and also to manufacture preforms with aesthetic shapes that are completely different from those imposed by the injection-moulding technique, and to do so at a low cost of manufacture.

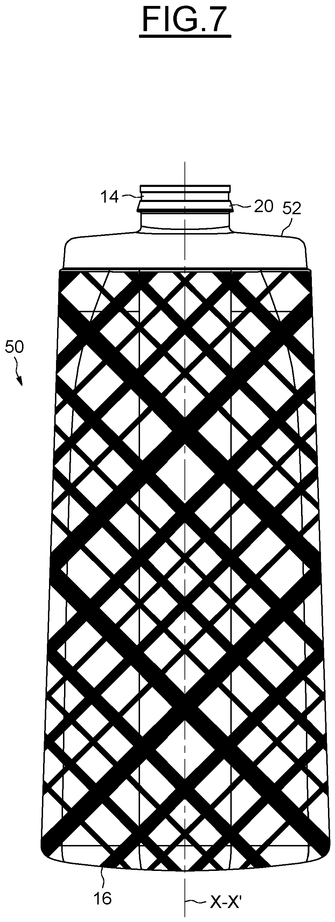

It is also possible to provide on the exterior surface of the preform patterns in an ordered or disordered arrangement, which are then found again on the container 50 as illustrated for example in Figure 7 in which elements that are identical bear the same references.

With additive manufacturing, it is also possible to provide on the exterior surface of the preform one or more markings that create a contrast effect. The marking or markings may exhibit a brightness and/or roughness different from that of the rest of the preform. The marking or markings may also be letters and/or symbols and/or figures and/or distinctive information of the brand of the product intended to be packaged in the finished container.

It is alternatively possible to create the preform with different materials, for example to have on the finished container soft regions promoting grip intended to be grasped by the user, and harder regions.

In addition, with manufacturing by sintering, it is also possible to envisage a preform provided with regions of different colours, for example by using the same or different materials. It is possible to use synthetic or metallic materials.

Furthermore, compared with producing the container directly using additive manufacturing, producing a container by blow-moulding a preform obtained beforehand by additive manufacturing makes it possible to obtain a container that has properties, notably mechanical properties, tailored to its use.

## Claims

1. Method for manufacturing a container, comprising:
- a step of manufacturing a preform comprising:
- a step (34) of transferring a digital model of the preform that is to be manufactured to an additive manufacturing machine,
- a step (36) of producing the preform using the additive manufacturing machine from the transferred digital model, the manufactured preform comprising a body (12) of elongate overall shape and provided with an open first end forming a neck (14) and with a closed second end forming a bottom (16), and
- a step (38) of cooling the manufactured preform at ambient temperature,
the method being **characterized in** further comprising
- a step (40) of heating the manufactured preform to between the glass transition temperature and the crystallization temperature of the material of the preform,
- a step (46) of biaxial stretching of the preform in the radial direction and in the axial direction inside a blow-moulding mould to form the container, and
- a step (48) of extracting the container formed from the blow-moulding mould.

2. Method according to claim 1, wherein the step of manufacturing the preform further comprises, before the step (34) of transferring the digital model of the preform that is to be manufactured, a step of creating said digital model.

3. Method according to claim 1 or 2, wherein the step (36) of producing the preform by additive manufacturing is obtained by depositing a fused material.

4. Method according to claim 1 or 2, wherein the step (36) of producing the preform by additive manufacturing is obtained using a jet of material.

5. Method according to claim 1 or 2, wherein the step (36) of producing the preform by additive manufacturing is obtained by sintering material using at least one beam of energy.

6. Method according to any of the preceding claims, wherein the manufactured preform is internally provided with at least one protrusion (24, 26) formed as an integral part of the body (12), and/or with a groove, the transverse section of which is delimited by an outline comprising an undercut.

7. Method according to any of the preceding claims, wherein the inner diameter of the neck (14) of the body of the manufactured preform is less than or equal to 8 mm.

8. Method according to any of the preceding claims, wherein the exterior surface of the body (12) of the manufactured preform comprises patterns and/or markings.

9. Method according to any of the preceding claims, wherein the body (12) of the manufactured preform is formed of several materials.

10. Method according to any of the preceding claims, wherein the body (12) of the manufactured preform has regions of different colours.

## Patentansprüche

1. Verfahren zum Herstellen eines Behälters, Folgendes umfassend:
- einen Schritt des Herstellens einer Vorform, Folgendes umfassend:
- einen Schritt (34) des Übertragens eines digitalen Modells der Vorform, die hergestellt werden soll, an eine generative Fertigungsmaschine,
- einen Schritt (36) des Herstellens der Vorform unter Verwendung der additiven Fertigungsmaschine aus dem übertragenen digitalen Modell, wobei die hergestellte Vorform einen Körper (12) von länglicher Gesamtgestalt umfasst und mit einem offenen ersten Ende, das einen Hals (14) ausbildet, und mit einem geschlossenen zweiten Ende versehen ist, das einen Boden (16) ausbildet, und
- einen Schritt (38) des Kühlens der hergestellten Vorform bei Umgebungstemperatur, das Verfahren weiterhin Folgendes umfassend
- einen Schritt (40) des Erwärmens der hergestellten Vorform auf eine Temperatur zwischen der Glasübergangstemperatur und der Kristallisationstemperatur des Materials der Vorform,
- einen Schritt (46) des biaxialen Streckens der Vorform in der radialen Richtung und in der axialen Richtung innerhalb einer Blasform, um den Behälter auszubilden, und
- einen Schritt (48) des Extrahierens des ausgebildeten Behälters aus der Blasform.

2. Verfahren nach Anspruch 1, wobei der Schritt des Herstellens der Vorform weiterhin vor dem Schritt (34) des Übertragens des digitalen Modells der Vorform, die hergestellt werden soll, einen Schritt des Erzeugens des digitalen Modells umfasst.

3. Verfahren nach Anspruch 1 oder 2, wobei der Schritt (36) des Herstellens der Vorform durch generative Fertigung durch Ablagern eines geschmolzenen Materials erlangt wird.

4. Verfahren nach Anspruch 1 oder 2, wobei der Schritt (36) des Herstellens der Vorform durch generative Fertigung unter Verwendung eines Materialstrahls erlangt wird.

5. Verfahren nach Anspruch 1 oder 2, wobei der Schritt (36) des Herstellens der Vorform durch generative Fertigung durch Sintern von Material unter Verwendung mindestens eines Energiestrahls erlangt wird.

6. Verfahren nach einem der vorhergehenden Ansprüche, wobei die hergestellte Vorform innen mit mindestens einem Vorsprung (24, 26), der als ein integraler Teil des Körpers (12) ausgebildet ist, und/oder mit einer Nut versehen ist, deren Querschnitt durch einen Umriss begrenzt ist, der eine Unterschneidung umfasst.

7. Verfahren nach einem der vorhergehenden Ansprüche, wobei der Innendurchmesser des Halses (14) des Körpers der hergestellten Vorform kleiner oder gleich 8 mm ist.

8. Verfahren nach einem der vorhergehenden Ansprüche, wobei die Außenfläche des Körpers (12) der hergestellten Vorform Strukturen und/oder Markierungen umfasst.

9. Verfahren nach einem der vorhergehenden Ansprüche, wobei der Körper (12) der hergestellten Vorform aus mehreren Materialien ausgebildet wird.

10. Verfahren nach einem der vorhergehenden Ansprüche, wobei der Körper (12) der hergestellten Vorform Bereiche von verschiedenen Farben aufweist.

## Revendications

1. Procédé de fabrication d'un récipient comprenant :
- une étape de fabrication d'une préforme comprenant :
- une étape de transfert (34) d'un modèle numérique de la préforme à fabriquer vers une machine de fabrication additive,
- une étape de réalisation (36) de la préforme par la machine de fabrication additive à partir du modèle numérique transféré, la préforme fabriquée comprenant un corps de forme générale allongée et pourvu d'une première extrémité ouverte formant col et d'une deuxième extrémité fermée formant fond, et
- une étape de refroidissement (38) de la préforme fabriquée à la température ambiante, le procédé étant **caractérisé en ce qu'**il comprend en outre :
- une étape de chauffage (40) de la préforme fabriquée entre les températures de transition vitreuse et de cristallisation du matériau de la préforme,
- une étape de bi-étirage (46) de la préforme dans le sens radial et dans le sens axial à l'intérieur d'un moule de soufflage pour fabriquer le récipient, et
- une étape d'extraction (48) hors du moule de soufflage du récipient formé.

2. Procédé selon la revendication 1, dans lequel l'étape de fabrication de la préforme comprend, avant l'étape de transfert (34) du modèle numérique de la préforme à fabriquer, une étape de création dudit modèle numérique.

3. Procédé selon la revendication 1 ou 2, dans lequel l'étape de réalisation (36) de la préforme par fabrication additive est obtenue par dépôt de matière fondue.

4. Procédé selon la revendication 1 ou 2, dans lequel l'étape de réalisation (36) de la préforme par fabrication additive est obtenue par jet de matière.

5. Procédé selon la revendication 1 ou 2, dans lequel l'étape de réalisation (36) de la préforme par fabrication additive est obtenue par frittage de matière à l'aide d'au moins un faisceau énergétique.

6. Procédé selon l'une quelconque des revendications précédentes, dans lequel la préforme fabriquée est pourvue intérieurement d'au moins une protubérance (22, 24) venue de matière avec le corps (12), et/ou d'une gorge, dont la section transversale est délimitée par un contour en contre-dépouille.

7. Procédé selon l'une quelconque des revendications précédentes, dans lequel le diamètre intérieur du col (14) du corps de la préforme fabriquée est inférieur ou égal à 8 mm.

8. Procédé selon l'une quelconque des revendications précédentes, dans laquelle la surface extérieure du corps (12) de la préforme fabriquée comprend des motifs et/ou des marquages.

9. Procédé selon l'une quelconque des revendications précédentes, dans laquelle le corps (12) de la préforme fabriquée est formé de plusieurs matériaux.

10. Procédé selon l'une quelconque des revendications précédentes, dans laquelle le corps (12) de la préforme fabriquée présente des zones de couleurs différentes.
